# EUROPEAN PATENT SPECIFICATION

(11) **EP 4 481 428 B1**
(45) Date of publication and mention of the grant of the patent: **26.08.2026**
(21) Application number: 23180158.0
(22) Date of filing: 19.06.2023
(51) Int. Cl.: G01S 7/35, G06F 7/26, G01S 7/292, G01S 13/524

(54) **APPARATUS AND METHOD FOR OS-CFAR DETECTION, AND RADAR SYSTEM**
VORRICHTUNG UND VERFAHREN ZUR OS-CFAR-DETEKTION UND RADARSYSTEM
APPAREIL ET PROCÉDÉ DE DÉTECTION OS-CFAR, ET SYSTÈME RADAR

(43) Date of publication of application: 25.12.2024
(73) Proprietor: Infineon Technologies AG, 85579 Neubiberg (DE)
(72) Inventor: HOSTALKA, Henrik, 01129 Dresden (DE); HUSSEIN, Eslam, 01307 Dresden (DE)
(74) Representative: 2SPL Patentanwälte PartG mbB

(56) References cited:
- US-A- 5 179 712
- US-A1- 2014 126 309

## Description

### Field

The present disclosure relates to sorting for OS-CFAR (order(ed) statistic(s) constant false alarm rate). Examples relate to an apparatus for OS-CFAR detection, a radar system and a method for OS-CFAR detection.

### Background

US 5 179 712 A proposes a rank cell array for ranking a series of sample values including a number of identical rank cells (RC1, RC2. . . ) permitting ready modification of the sorting window size in an OS CFAR radar application, for example. Each rank cell (RC1, RC2. . . ) includes a multiplexer (49), a D flip-flop (41), first and second comparators (43, 45), and a multiplexer controller (49). Each clock interval, the foregoing circuitry examines the sample value entering the sorting window, the sample value leaving the sorting window, the sample value in the preceding rank cell, and the sample value in the succeeding rank cell to determine the sample value in the rank cell during the next clock interval.

US 2014/126309 A1 proposes a shiftable memory in a system and a method to shift a contiguous subset of stored data within the shiftable memory. The shiftable memory includes a memory having built-in shifting capability to shift a contiguous sub set of data stored by the memory from a first location to a second location within the memory. The contiguous subset has a size that is smaller than a total size of the memory. The system further includes a processor to provide an address and the length of the contiguous subset. The method includes selecting the contiguous subset of data and shifting the selected contiguous subset.

Conventionally, sorting algorithms for OS-CFAR techniques require a reallocation of data applying multiple read/write operations on memory. This leads to a high compute intensity which especially poses challenges in real-time or resource-constrained scenarios. Hence, there is a demand for improved sorting for OS-CFAR detection.

### Summary

This demand is satisfied by the independent claims. Further beneficial embodiments are given by the dependent claims.

Some aspects of the present disclosure relate to an apparatus for OS-CFAR, comprising a parallel shift register coupling a plurality of storage segments in a cascade, wherein the shift register is configured to store data indicating data elements of radar data of a radar sensor, and control circuitry configured to perform a sorting algorithm for OS-CFAR detection using the steps of comparing a new data element of the radar data to at least one data element indicated by data stored in the parallel shift register, determining at least one storage segment of the plurality of storage segments at which data indicating the new data element is to be stored based on the comparison, and controlling the parallel shift register to shift data stored at the determined storage segment to another storage segment. The control circuitry is further configured to perform the sorting algorithm for a first window of data elements of the radar data, after the sorting algorithm for the first window is performed, select a second window of data elements of the radar data and perform the sorting algorithm for the second window through removing only partially the data stored in the parallel shift register during performance of the sorting algorithm for the first window.

Some aspects of the present disclosure relate to a radar system, comprising an apparatus as described herein, and a radar sensor configured to generate the radar data.

Some aspects of the present disclosure relate to a method for OS-CFAR detection, comprising storing, at a parallel shift register coupling a plurality of storage segments in a cascade, data indicating data elements of radar data of a radar sensor, and performing, by control circuitry, a sorting algorithm for OS-CFAR detection using the steps of comparing a new data element of the radar data to at least one data element indicated by data stored in the parallel shift register, determining at least one storage segment of the plurality of storage segments at which data indicating the new data element is to be stored based on the comparison, and controlling the parallel shift register to shift data stored at the determined storage segment to another storage segment. The method further comprises performing, by the control circuitry, the sorting algorithm for a first window of data elements of the radar data, after the sorting algorithm for the first window is performed, selecting a second window of data elements of the radar data and performing the sorting algorithm for the second window through removing only partially the data stored in the parallel shift register during performance of the sorting algorithm for the first window.

### Brief description of the Figures

Some examples of apparatuses and/or methods will be described in the following by way of example only, and with reference to the accompanying figures, in which
Fig. 1 illustrates an example of an apparatus for OS-CFAR detection;
Figs. 2a and 2b illustrate examples of a shift register;
Figs. 3a to 3d illustrate an example of a sorting algorithm for OS-CFAR detection;
Fig. 4 illustrates an example of a removal of address data from a shift register;
Fig. 5 illustrates an example of OS-CFAR detection;
Fig. 6 illustrates an example of a radar system; and
Fig. 7 illustrates an example of a method for OS-CFAR detection.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

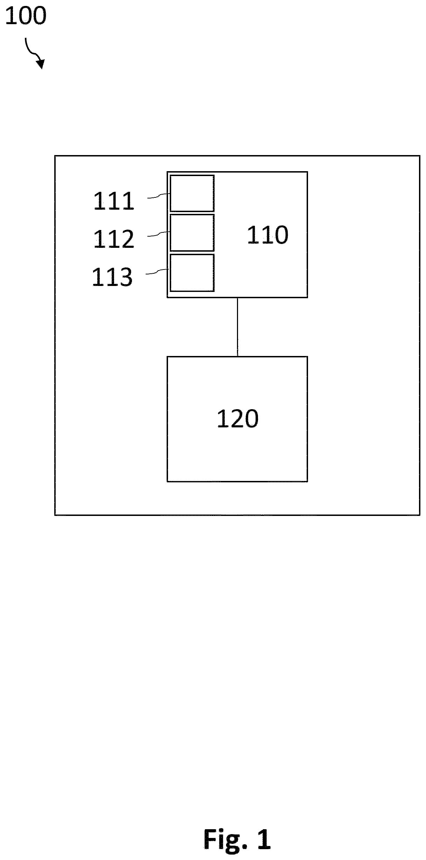

**Fig. 1** illustrates an example of an apparatus 100 for OS-CFAR detection. OS-CFAR detection is a technique for adaptive thresholding used in signal processing of radar data for detecting or tracking targets, e.g., in the presence of clutter or noise.

The apparatus 100 is to be considered in the context of a radar sensor. For example, the apparatus 100 may be partially or fully integrated into a radar sensor. Alternatively, the apparatus 100 may be external to the radar sensor. The radar sensor may acquire radar data which may, e.g., indicate an IF (intermediate frequency) signal of the radar sensor. The radar data may be a pre-processed version of raw radar data (e.g., a noise-reduced, DC-removed (direct current) version thereof). The radar sensor may acquire the radar data, e.g., by mixing a reflection of a transmitted signal with a local oscillator signal at a specific frequency.

The apparatus 100 comprises a parallel shift register 110 and control circuitry 120. The control circuitry 120 is coupled to the shift register 110 in order to control the shift register 110 as described further below.

The parallel shift register 110 couples a plurality of storage segments (or group of storage segments) 111, 112, 113 in a cascade. The parallel shift register 110 may be digital circuitry, e.g., comprising storage segments operated in parallel within groups, the groups being connected as the cascade. The parallel shift register 110 may be implemented as an array of shift registers, where one dimension of the array forms the cascade and the other dimension the parallel paths. The cascade may define a specific order of the storage segments, e.g., the storage segment 111 may store a first part of data, storage segment 112 may store a second part of the data subsequent to the first part, and storage segment 113 may store a third part of the data subsequent to the second part.

The storage segments 111, 112, 113 may be or comprise at least one of flip flops, latches, transmission gates or alike.

The parallel operated storage segments may be controlled simultaneously such that data may load into the storage segments in parallel, with each bit of the data entering its corresponding storage segment. Likewise, the bits stored in the storage segments may be shifted or transferred in parallel from one storage segment to another when a trigger is applied. A primary operation of such a parallel shift register 110 may be shifting data in a specific direction (left or right) by one or more storage segments (by a predefined number of storage segments). This operation may be realized by a clock signal synchronizing the shift of the data among the affected storage segments.

In Fig. 1, there are shown three storage segments 111 to 113 for illustrative purposes only. In other examples, the parallel shift register 110 may comprise any number of storage segments, e.g., any number n ≥ 2 of storage segments. Further, the blocks indicating storage segments 111 to 113 shown in Fig. 1 shall be understood as abstract representation of storage segments: the form, size or arrangement of the storage segments 111 to 113 shown in Fig. 1 are meant for illustrative purposes. For instance, the shift register 110 may exhibit a linear, array or three-dimensional arrangement of storage segments. In other examples, the storage segments may be ungrouped.

The shift register 110 may, in some examples, be implemented as a buffer storage, i.e., it may temporarily store data while a sorting algorithm for OS-CFAR detection is performed by the control circuitry 120. As an OS-CFAR algorithm may require a subset of the radar data to be sorted or re-ordered, the use of a buffer storage may ensure that the original radar data stored at a further storage circuitry may stay unchanged, i.e., in its original order. The further storage circuitry may be external to the shift register 110 and optionally external to the apparatus 100. The apparatus 100 may be coupled to the further storage circuitry such that it has at least partially access, e.g., read and optionally write access, to the further storage circuitry. The apparatus 100 may therefore be able to obtain at least partially the radar data stored therein. The apparatus 100 may obtain the radar data, e.g., via interface circuitry or directly, in case the apparatus 100 comprises the further storage circuitry. Further, the buffer implementation of the shift register 110 may offload an external processing circuitry for further processing of the radar data.

The shift register 110 is configured to store data indicating data elements of the radar data of a radar sensor. The control circuitry 110 is configured to perform a sorting algorithm for OS - CFAR detection based on the data stored in the shift register 110, as explained further below. The data elements may refer to samples of the radar data or to values (e.g., ranges) derived from the radar data. For instance, the data elements may be a subset of (e.g., modified) samples of the radar data, e.g., selected within one chirp of the radar data. The data elements may be selected depending on the OS-CFAR algorithm. For example, the data elements may be selected by windowing, as explained further below.

The data stored in the shift register 110 may, in some examples, directly indicate or be the data elements, e.g., the data elements may be loaded (copied) into the shift register 110. In other examples, the data may be compressed data or data of reduced size compared to the data elements. In yet other examples, the data may be address data indicating addresses of the data elements of radar data at the further storage circuitry.

The address data may indicate the addresses such that the address data may be mappable, e.g., based on a specific scheme, to the addresses of the data elements. The address data may, e.g., indicate unique identifiers (or indices, pointers or alike) assigned to respective storage locations in the further storage circuitry. The address data may, for instance, indicate logical addresses which are translatable to physical addresses of the further storage circuitry. In some examples, the address data may indicate relative addresses of the data elements, i.e., the address data may indicate a location at the further storage circuity relative to a predetermined location, e.g., relative to a (starting) address of a specific data element within a dataset (or window) to be sorted. For example, the address data may be determined by numbering or indexing these data elements. The numbers or indexes assigned to the data elements may correspond to their order in a data sequence of the radar data. This may limit the length of the data stored in the shift register 110 to the number of data elements being stored for OS-CFAR processing.

In many sorting algorithms for OS-CFAR, data has to be repeatedly moved from one storage segment of a sorting buffer to the next. This may require many read/write transactions on conventional memory, e.g., using memory macros. By contrast, the apparatus 100 provides a shift register 110, e.g., implemented as an array of scannable registers (standard (STD) logic), which may simplify shift operations on the data. Further, the shift register 110 may reduce the space needed for implementing a buffer storage. The buffer storage may thus be kept small while still maintaining the full sorting capability.

The optional usage of address data instead of the actual radar data may have further advantages in some applications: Performing a sorting algorithm, such as ranking the values (data elements) in order of magnitude, may be a compute and memory intense part of OS-CFAR. Conventional OS-CFAR buffers (such as memory macros) may require as much memory as the original radar data. This means that conventionally the minimum size of the memory may be equal to the size of the data elements themselves. By contrast, the shift register 110 may be implemented in a smaller minimum size when storing not the data elements themselves but indices (e.g., as integers) representing the data location (addresses), e.g., within one window of the radar data. Thus, the apparatus 100 may enable a reduction of memory size or storage capacity requirements. In a specific application, the data elements have each a size of 24 bit, while their pointers have each a size of 4 bit only. The apparatus 100 may thus enable an indexed sort which may require only minimal logic added in the addressing path. The apparatus 100 may further enable a reduced memory area which leads to decreased resource and power consumption.

In a specific implementation of the parallel shift register 110, a nm (nanometer) size integration of scannable storage segments with asynchronous reset may be realized. One storage segment may require 8,7 GE (gate equivalents) NAND-2 gates (NAND gates with two input nodes) of cell area. Assuming a radar sensor with three receiving channels, a length of one portion of address data of 4 bits and a window length of 16 data elements, the shift register 110 may occupy roughly 3 x 4 x 16 x 8,7 GE = 1,67 kGE (kilo gate equivalents) of cell area.

The shift register 110 may, in some examples, have a circuit configuration which allows a data input at more than one storage segment of the plurality of storage segments, e.g., at all storage segments. For example, the plurality of storage segments may be coupled to respective multiplexers. The multiplexers may be a digital electronic device or circuitry for selecting and routing multiple input signals onto a single output line connected to a respective storage segment of the plurality of storage segments 111, 112, 113 based on control signals generated by the control circuitry 120. Thus, the function of the multiplexers may be to choose an input signal from a plurality of input nodes and pass the chosen input signal through as the output. The selection may be determined by the control signals provided to the multiplexer. The control signals may be provided, e.g., via a control line. The control signals may, for example, be in the form of binary-encoded signals, with each unique combination representing a specific input selection.

The multiplexers may comprise first input nodes coupled to respective output nodes of previous or subsequent storage segments in the cascade and second input nodes coupled to a data input carrying the data to be stored in the shift register 110. For example, the control circuitry 120 may control one or more of the multiplexers to select the respective first input node for shifting (pushing) data from one storage segment to another one. Or the control circuitry 120 may control one or more of the multiplexers to select the respective second input node for inserting data, e.g., indicating a new data element. Alternatively or additionally, the first input nodes may be coupled to respective output nodes of any other storage segment (or group of storage segments), e.g., storage segments being more than one storage segment to the left (previous) or to the right (subsequent) in the cascade. The input nodes of the shift register 110 may be asynchronous and/or synchronous input nodes. The circuit configuration of the shift register 110 may thus provide flexibility to adapt or optimize the shift register 110 for a certain sorting algorithm.

The circuit configuration may further allow shifting operations for shifting data to both directions. For example, the multiplexers may further comprise third input nodes coupled to respective output nodes of the other one of the previous or subsequent storage segments in the cascade. Alternatively or additionally, the third input nodes may be coupled to respective output nodes of any other storage segment (or group of storage segments), e.g., storage segments being more than one storage segment to the left (previous) or to the right (subsequent) in the cascade. Thus, the control circuitry 120 may control one or more of the multiplexers to select the first or third input node for shifting data from one storage segment back or forth in the cascade. This may further help exploiting the fact of a moving window: the shift register 110 may extend the one-directional shift operation with a "push or pull" option. This may further enhance the flexibility for tailoring the shift register to a certain sorting algorithm, e.g., to sorting algorithms which require shift operations to both directions. Moreover, the bi-directional shifting possibility may simplify a removal of data when changing the window, as explained further below. This may enable subsequent sorting to reuse presorted data of preceding windows.

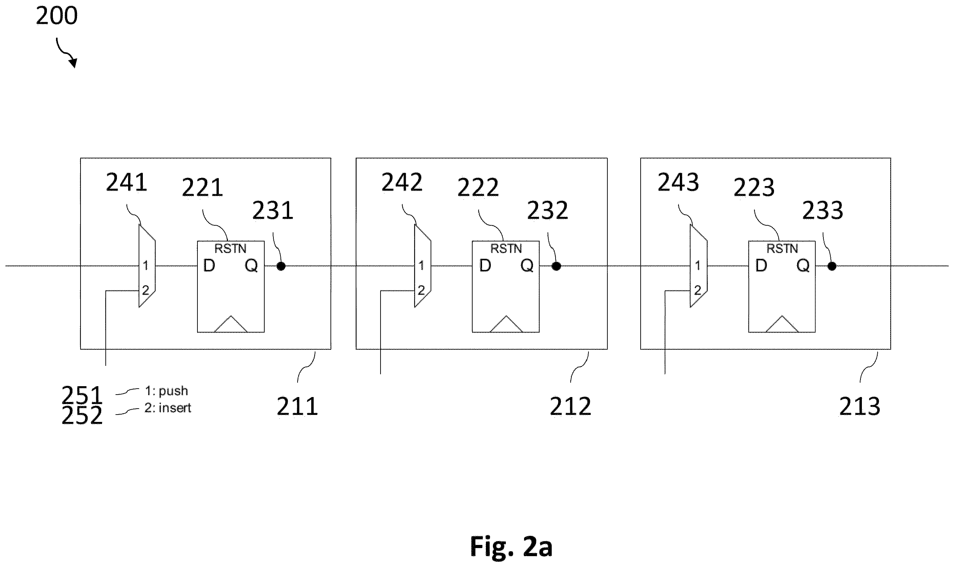

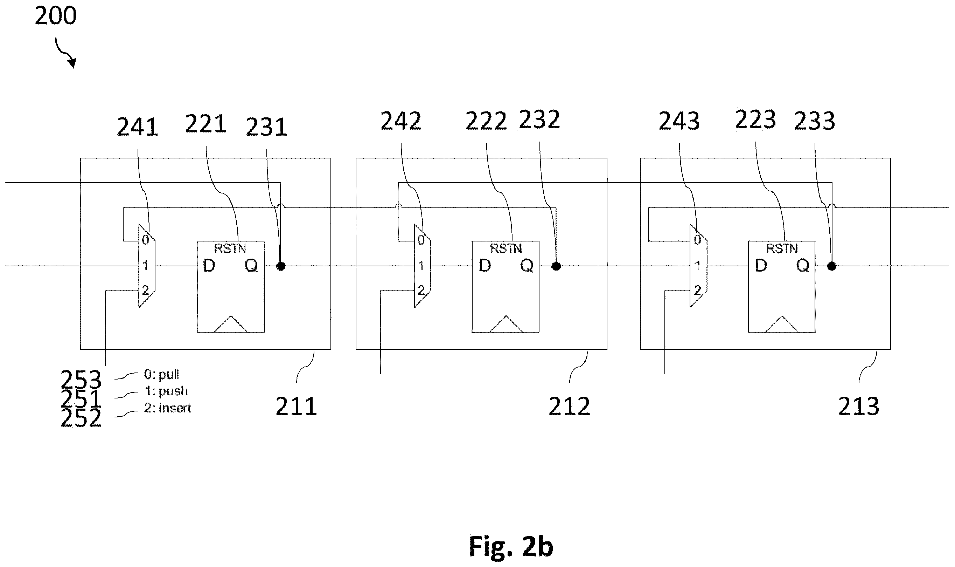

Two examples of a parallel shift register 200 are illustrated by **Fig. 2a** and **Fig. 2b****.** The shift register 200 comprises a plurality of flip flops (or groups of flip flops) 221, 222, 223 coupled in a cascade. In the example of Figs. 2a and 2b, three flip flops 221, 222, 223 are shown. However, the skilled person will acknowledge that the shift register 200 may, in other examples, comprise any number k ≥ 2 of flip flops.

The flip flops 221, 222, 223 are coupled to respective output nodes 231, 232, 233, each connecting an output of one flip flop with an input node of a subsequent flip flop, thereby forming the cascade. Thus, the flip flops 221, 222, 223 are connected in a series or in a sequential manner. The shift register 110 comprises a plurality of multiplexers (MUX) 241, 242, 243, each connected to an input of a respective one of the flip flops 221, 222, 223. Thus, each flip flop (or each group of flip flops) may be coupled to a respective multiplexer of the plurality of multiplexers 241, 242, 243.

The shift register 200 comprises two input nodes for each of the multiplexers 241, 242, 243: first input nodes 251 and second input nodes 252. The first input nodes 251 are coupled to respective output nodes 231, 232, 233 of previous flip flops in the cascade. The second input nodes 252 are coupled to a data input carrying the data. Thus, the control circuitry 120 may control one or more of the multiplexers 241, 242, 443 to select the respective first input node 251 for shifting (pushing) address data from one flip flop to the next. Further, the control circuitry 120 may control one or more of the multiplexers 241, 242, 243 to select the respective second input node 252 for inserting data, e.g., indicating a new data element.

In Fig. 2b, the shift register 200 further comprises third input nodes 253 for each of the multiplexers 241, 242 243. The third input nodes 253 are coupled to respective output nodes 231, 232, 233 of subsequent flip flops in the cascade. Thus, the control circuitry 120 may control one or more of the multiplexers 241, 242, 243 to select the respective third input node 253 for shifting data from one flip flop back to the previous flip flop in the cascade. Together with the first input nodes, the shift register 200 may thus be capable of shifting data in both directions, to previous or subsequent flip flops in the cascade.

The shift register 200 is not limited to a D-Q logic as illustrated in Figs. 2a and 2b: In other examples, the shift register 200 may have a negated input or output, or have any additional logic circuit. Further, the shift register 200 may alternatively be implemented with a different storage technology than flip flops, such as with latches or alike.

Referring back to Fig. 1, the sorting algorithm performed by the control circuitry 120 may aim at bringing the data into a specific order for OS-CFAR detection. The choice of a sorting algorithm may depend on the target application, e.g., on the size or characteristics of the data, on the number of ordered statistics required, the performance requirements of the OS-CFAR detection or alike. The control circuitry 120 may perform any sorting algorithm, e.g., at least one of a merge sort, a quick sort, a heap sort, a bubble sort, a selection sort, etc. In some examples, the control circuitry 120 is configured to perform an insertion sort for OS-CFAR detection. Insertion Sort is a comparison-based sorting algorithm that iteratively builds the final sorted data one element at a time. Insertion sort may increase the sorting efficiency, especially for small-size data such as in cases where address data is used.

The performance of the sorting algorithm may, in some examples, require pre-processing of the data elements. The pre-processing may be performed by processing circuitry external to the control circuitry 120 or by the control circuitry 120 itself. In the latter case, the control circuitry 120 may be configured to determine the data elements, e.g., such that they exhibit a data format required for OS-CFAR detection. For example, the control circuitry 120 may determine a range representation of the radar data indicating ranges of potential targets within the field of view of the radar sensor. The control circuitry 120 may perform a Fourier transform (e.g., a fast Fourier transform) on the radar data, e.g., along fast time, in order to yield the range representation. The data elements may be selected from the said range representation.

The radar data may, in some examples, be originally provided in cartesian format with a real and imaginary part. In such cases, the control circuitry 120 may be further configured to determine the data elements through converting the radar data into a polar representation having a magnitude and an angle. The data may be converted into a polar format by, e.g., applying a Pythagorean addition on the real and the imaginary part. The data elements may be selected such that they are or indicate magnitudes of the polar representation of the radar data.

These magnitudes may be represented as integer values which may, in a specific example, have a length of 24 bits. In cartesian format, one data instance of the radar data may have a length of 48 bits. However, the shift register 110 may store a relative index of these data instances or values, and not the magnitudes or the real and imaginary parts themselves. Depending on the maximum size N of a subset (an array) of the radar data to be sorted, the length of the indices may be W according to Equation 1: $W = ceil \left({log}_{2} N\right)$

With an integer width Wᵢₙₜ of 24 bits for a magnitude value, the number of required bits B is reduced according to Equation 2: $B = ceil \left({log}_{2} N\right) / {W}_{int} = ceil \left({log}_{2} 16\right) / 24 \approx 17 %$

In cases where the control circuitry 120 performs pre-processing on the radar data, the apparatus 100 may have additional advantages: since for the pre-processing, e.g., for the conversion from a cartesian format (IQ format or real and imaginary part) to a polar format (magnitude and angle), an access to the original memory (further storage circuitry) is needed anyway, the control circuitry 120 may use this access to perform the sorting algorithm, as described in the following.

The control circuitry 120 is configured to perform a sorting algorithm for OS-CFAR detection using the steps of comparing a new data element of the radar data to at least one data element indicated by data stored in the parallel shift register 110, determining at least one storage segment of the plurality of storage segments 111, 112, 113 at which data indicating the new data element is to be stored based on the comparison and controlling the parallel shift register 110 to shift data stored at the determined storage segment to another storage segment.

The control circuitry 120 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The control circuitry 120 may optionally be coupled to, e.g., read only memory (ROM) for storing software, random access memory (RAM) and/or non-volatile memory.

For example, there may be a plurality of data elements, e.g., of a window of the radar data, which themselves or whose addresses are to be stored in a sorted manner at the shift register 110. For instance, the control circuitry 120 may be configured to select a window of the radar data comprising the plurality of data elements, e.g., of which some are previous and others are next to a data element under test. The control circuitry 120 may be configured to perform the sorting algorithm for the selected window. The control circuitry 120 may select the new data element from the plurality of data elements, e.g., in a predefined manner, e.g., the control circuitry 120 may go through the data elements of the plurality of the data elements one after another following a predefined order of the data elements at the further storage circuitry. The control circuitry 120 may then either load the data elements into the shift register or determine addresses of data elements according to their relative location at the further storage circuitry and load the addresses into the shift register 110.

The comparison may be performed based on any predefined comparison criterion. For instance, the comparison criterion may define a mathematical relation between the new data element and already processed/sorted data elements which has to be true for fulfilling the predefined comparison criterion. For instance, the control circuitry 120 may perform the comparison by determining whether the new data element has a (range) value which is smaller (or greater), e.g., by a predefined value, than that of a data element already processed. If so, the comparison criterion is determined to be fulfilled.

The fulfillment of the comparison criterion may indicate the location among the storage segments 111 to 113 where address data of the new data element or the new data element is to be inserted. For instance, if the control circuitry 120 determines that a storage segment indicates a data element fulfilling the comparison criterion, the said storage segment or a neighboring storage segment may be determined as the location at which the new data element or its address is to be stored.

The comparison may further be performed along the already processed data elements until the comparison criterion is fulfilled. Thus, the new data element may be compared step by step with an existing list of sorted elements. For instance, if the comparison criterion is not fulfilled with one data element, the control circuitry 120 may select another of the already processed data elements and perform the comparison again. For example, the control circuitry 120 may be configured to consecutively select storage segments in an ascending or descending order and compare respective data elements indicated by data stored at the selected storage segment to the new data element until the comparison fulfills the predefined comparison criterion.

Shifting the data may comprise storing said data at the other storage segment (different to the determined storage segment) and optionally deleting the data from the determined storage segment. The other storage segment may be a predefined storage segment of the plurality of storage segments 111 to 113, e.g., predefined relative to the determined storage segment, such as a storage segment subsequent or previous to the determined storage segment. In some examples, the control circuitry 120 is further configured to control the shift register 110 to shift all data stored in storage segments subsequent or previous to the determined storage segment by a predefined number of storage segments, e.g., by one, two or more storage segments. For instance, the shift register 110 may push all data at the determined storage segment and/or following/preceding the determined storage segment aside.

In order to insert data indicating the new data element into the correct position, the control circuitry 120 may, in some examples, further be configured to control the shift register 110 to store the data indicating the new data element at the determined storage segment.

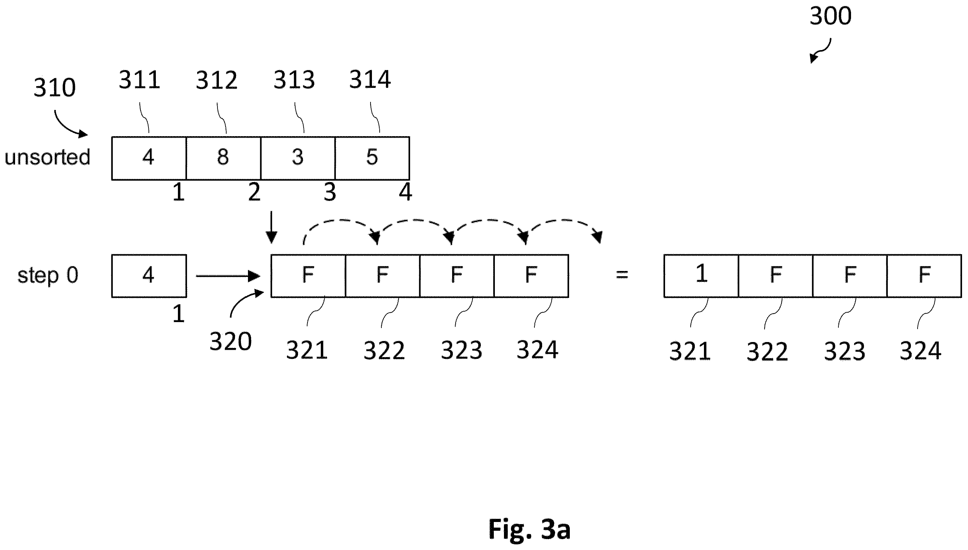

A concrete example of how the sorting algorithm may be performed is illustrated by **Figs. 3a to 3d.** Figs. 3a to 3d show a first step, a second step, a third step and a fourth step of an example of a sorting algorithm 300, respectively. In the example of Figs. 3a to 3d, the sorting algorithm 300 is an insertion sort. The sorting algorithm 300 may be performed by an apparatus for OS-CFAR detection as described herein, such as by the apparatus 100.

Control circuitry, such as control circuitry 120, may be configured to sort data indicating data elements 310 of radar data stored at a further storage circuitry. In Fig. 3a, the data elements 310 are shown in their original, unsorted state, comprising a first data element 311 having the value 4, a second data element 312 having the value 8, a third data element 313 having the value 3, and a fourth data element 314 having the value 5.

The data elements 310 are indexed according to their location at the further storage circuitry. The first data element 311 has the index 1, the second data element 312 has the index 2, the third data element 313 has the index 3, and the fourth data element 314 has the index 4.

In the first step (step 0) illustrated by Fig. 3a, the control circuitry 120 selects the first data element 311 as new data element and compares the new data element to at least one data element indicated by address data stored in shift register 320. The shift register 320 may be an example of an implementation of shift register 110. The shift register 320 comprises a plurality of storage segments coupled in a cascade: a first storage segment 321, a second storage segment 322 subsequent to the first storage segment 321, a third storage segment 323 subsequent to the second storage segment 322, and a fourth storage segment 324 subsequent to the third storage segment 323. In the first step, the shift register 320 is not yet filled with any (address) data (e.g., Figs. 3a to 3d may show an initial sorting). The control circuitry 120 therefore controls the shift register 320 to store address data (the index 1) of the new data element at the first storage segment 321.

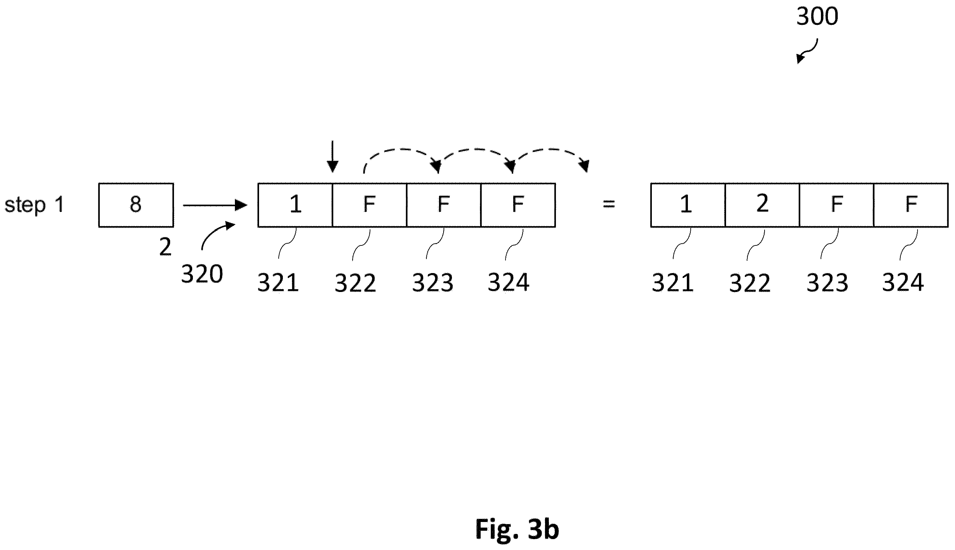

In the second step (step 1) illustrated by Fig. 3b, the control circuitry 120 selects the second data element 312 (8) as the new data element and compares the new data element to at least one data element indicated by address data stored in the shift register 320. The control circuitry 120 selects the first storage segment 321 and compares the first data element 311 indicated by the address data stored at the selected first storage segment 321 to the new data element.

The control circuitry 120 then determines a storage segment of the plurality of storage segments 321 to 324 at which address data (index 2) of the new data element is to be stored based on the comparison. For example, in response to determining that the comparison fulfills a predefined comparison criterion, the control circuitry 120 may determine the desired storage segment for the address data of the new data element. The predefined comparison criterion of the example of Figs. 2a to 2d may be "the currently checked data element (the data element indicated by address data stored at the currently selected storage segment) being greater than the new data element". Since 4 (the first data element 311) is not greater than 8 (the new data element), the predefined comparison criterion is not fulfilled.

Since the following storage segments 322 to 324 are empty, the (next) second storage segment 322 is determined as the desired storage segment for address data of the new data element. The control circuitry 120 controls the shift register 320 to store the address data at the determined second storage segment 322.

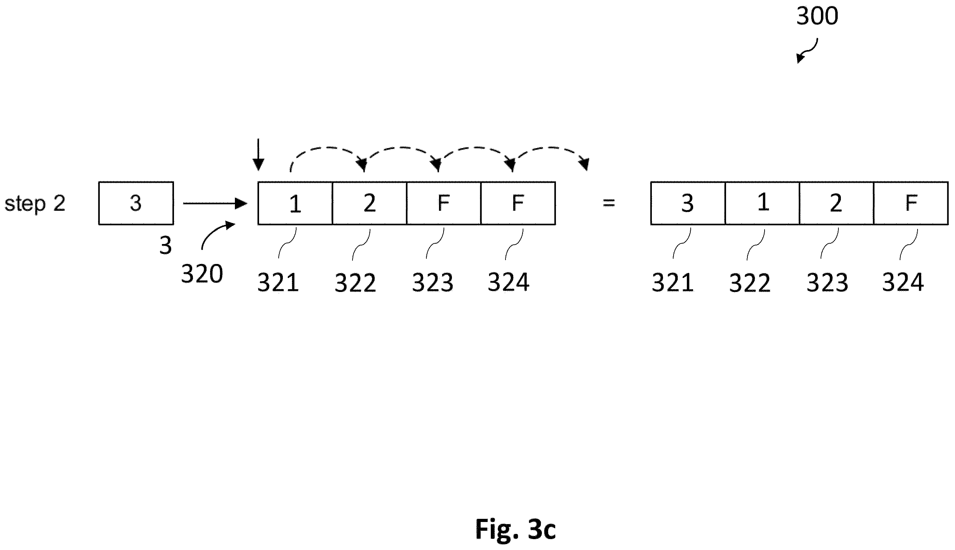

In the third step (step 2) illustrated by Fig. 3c, the control circuitry 120 selects the third data element 313 (3) as the new data element and compares the new data element to at least one data element indicated by address data stored in the shift register 320. The control circuitry 120 selects the first storage segment 321 and compares the first data element 311 indicated by the address data stored at the selected first storage segment 321 to the new data element. Since 4 (the first data element 311) is greater than 3 (the new data element), the predefined comparison criterion is fulfilled.

The control circuitry 120 determines the first storage segment 321 to store address data (index 3) of the new data element since it is the storage segment where the comparison has been fulfilled. The control circuitry 120 then controls the shift register 320 to shift address data stored at the determined first storage segment 321 to another storage segment, to storage segment 322. The control circuitry 120 controls the shift register 320 to shift all address data stored in storage segments subsequent to the determined first storage segment 321 by one storage segment. Thus, the index 2 previously stored at the second storage segment 322 is shifted to storage segment 323. Then, the control circuitry 120 controls the shift register 320 to store the address data of the new data element at the determined first storage segment 321.

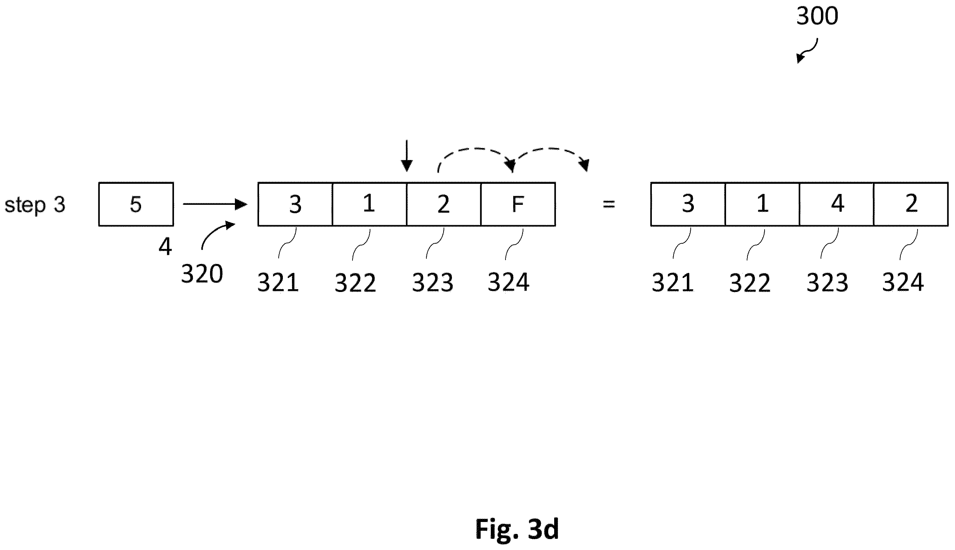

In the fourth step (step 3) illustrated by Fig. 3d, the control circuitry 120 selects the fourth data element 314 (5) as the new data element and compares the new data element to at least one data element indicated by address data stored in the shift register 320. The control circuitry 120 selects the first storage segment 321 and compares the third data element 313 indicated by the address data stored at the selected first storage segment 321 to the new data element. Since 3 (the third data element 313) is not greater than 5 (the new data element), the predefined comparison criterion is not fulfilled.

The control circuitry 120 consecutively selects the storage segments 321 to 324 in an ascending order and compares respective data elements indicated by address data stored at the selected storage segment to the new data element until the comparison fulfills the predefined comparison criterion. Then, the control circuitry selects the second storage segment 322 and compares the first data element 311 indicated by the address data stored at the selected second storage segment 322 to the new data element. Since 4 (the first data element 311) is not greater than 5 (the new data element), the predefined comparison criterion is not fulfilled. Then, the control circuitry selects the third storage segment 323 and compares the second data element 312 indicated by the address data stored at the selected third storage segment 323 to the new data element. Since 8 (the second data element 312) is greater than 5 (the new data element), the predefined comparison criterion is fulfilled.

The control circuitry 120 determines the first storage segment 321 to store address data (index 3) of the new data element since it is the storage segment where the comparison has been fulfilled. The control circuitry 120 then controls the shift register 320 to shift address data stored at the determined first storage segment 321 to another storage segment, to storage segment 322. The control circuitry 120 controls the shift register 320 to shift all address data stored in storage segments subsequent to the determined first storage segment 321 by one storage segment. Thus, the index 2 previously stored at the second storage segment 322 is shifted to storage segment 323. Then, the control circuitry 120 controls the shift register to store the address data of the new data element at the determined first storage segment 321.

The control circuitry 120 determines the third storage segment 323 to store address data (index 4) of the new data element since it is the storage segment where the comparison has been fulfilled. The control circuitry 120 then controls the shift register 320 to shift address data stored at the determined first storage segment 321 to another (the next or subsequent) storage segment, to storage segment 324. Then, the control circuitry 120 controls the shift register 320 to store the address data of the new data element at the determined third storage segment 323.

Referring back to Fig. 1, the apparatus 100 may additionally provide an improved change between windows or subsets of the radar data. For instance, the sorting algorithm may be performed repeatedly for a sliding window of the radar data. It is to be noted that the window does not necessarily comprise consecutive data points of the radar data. For instance, the window may comprise two separated arrays of consecutive data elements.

The window may be shifted along the radar data by a predefined number of data elements when the sorting algorithm is completed for the currently selected data elements. The control circuitry 120 is further configured to perform the sorting algorithm for a first window of data elements of the radar data. After the sorting algorithm for the first window is performed (completed, i.e., all data indicating data elements of the first window is sorted), the control circuitry 120 selects a second window of data elements of the radar data and perform the sorting algorithm for the second window.

The control circuitry 120 performs the sorting algorithm for the second window through removing only partially the (e.g., address) data stored in the shift register 110 during performance of the sorting algorithm for the first window. That is, instead of resetting the shift register 110 for sorting the next window, a part of the presorted data is kept. For instance, the first window and the second window may have a part of their data elements in common, e.g., in cases where the sliding of the window from the first position (of the first window) to the second position (of the second window) does not skip all data elements from the first window. The shift register 110 may at least partially keep the data indicating the data elements which the first and the second window have in common, whereas data indicating data elements which are not in common may be deleted. When using address data, the control circuitry 120 may trigger a removal of the address data having a lowest index, or a removal of the address data which was inserted into the shift register 110 the longest time ago among all address data stored in the shift register 110. By keeping at least part of the data, the second window is already presorted, and only newly incoming data elements have to be sorted. Thus, the apparatus 100 may reduce computational effort for performing the sorting algorithm.

The control circuitry 120 may further be configured to remove only partially the data by controlling the shift register 110 to shift data to be kept in the shift register 110 during performance of the sorting algorithm for the second window to at least one storage segment storing data to be removed. For instance, the (partial) removal of data when changing windows may conventionally leave a gap between portions of data stored in the shift register 110. For instance, if the data at storage segment 112 is removed, then an empty memory space is left between storage segments 111 and 113. By contrast, the apparatus 100 may perform a removal by overwriting the data to be deleted by data to be kept.

For example, the control circuitry 120 may control the shift register 110 to pull data to be kept in a subsequent or previous storage segment into the storage segment to be emptied. Contiguous data sequences which are to be kept (or all data subsequent or previous to the data to be removed) may be jointly shifted by a predefined number of storage segments to overwrite the data to be removed. The control circuitry 120 may, e.g., rearrange remaining data to a contiguous data sequence within the storage segments 111 to 113. The apparatus 100 may therefore improve the pre-sorting for the second window.

The partial removal of the data may further reduce the number of insertion operations. For example, the control circuitry 120 may be further configured to perform the sorting algorithm for the second window through controlling the shift register 110 to exclusively insert data indicating data elements of the second window which has not been inserted during performance of the sorting algorithm for the first window. That is, only data elements which the first and the second window do not have in common may have their data inserted during performance of the sorting algorithm for the second window.

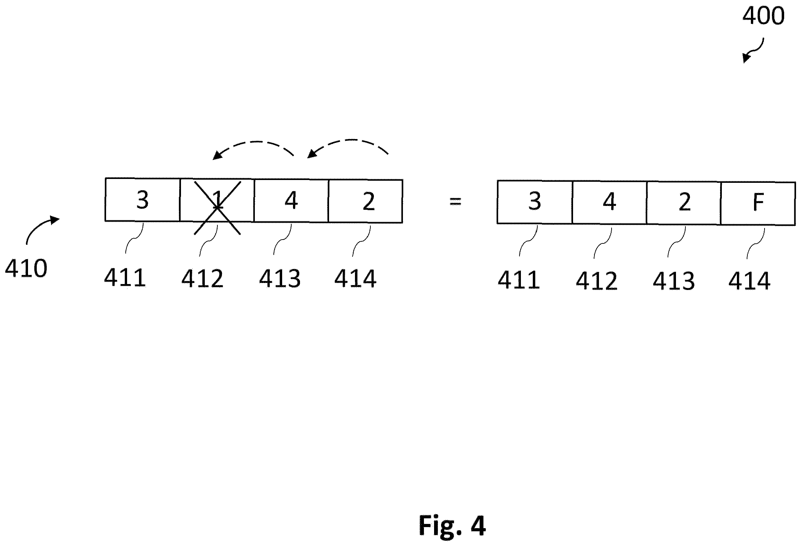

An example of how shift register 110 may be controlled for a change of windows is illustrated by **Fig. 4.** Fig. 4 shows an example of a data removal 400 during the change of windows. A shift register 410 comprises storage segments 411, 412, 413 and 414 which are filled with address data 3, 1, 4 and 2, respectively. During change of windows, the oldest address data, i.e., the address data indicating the lowest index, which is 1 in the example of Fig. 4, is to be deleted. A control circuitry as described herein, such as control circuitry 120, may perform the deletion by shifting address data to be kept in the shift register 410 to the storage segment 412 storing the address data to be deleted. In the example of Fig. 4, the control circuitry 120 may shift each of the indices 4 and 2 by one storage segment to the left. The storage segments 411 to 413 afterwards store the address data 3, 4 and 2, respectively, whereas storage segment 414 is empty.

Referring back to Fig. 1, the apparatus 100 may further perform the OS-CFAR detection itself, whereas, alternatively, the OS-CFAR detection may be performed by external processing circuitry. In some examples, the control circuitry 120 is further configured to, after performance of the sorting algorithm, select a data element indicated by data stored at at least one (e.g., predefined) storage segment of the plurality of storage segments 111, 112, 113. The predefined storage segment may be defined to implement a certain statistical analysis of the OS-CFAR detection. Since the sorted data may indicate a ranking, e.g., by magnitude of the data elements, a predefined kth position in the order of the storage segments 111, 112, 113 may correspond to the k highest or smallest magnitude among the data elements. k may be chosen depending on the target application, e.g., to balance sensitivity to weak targets and to increase robustness against clutter and noise.

Assuming the data elements represent a signal environment of a data element under test, e.g., a left side and right side array of the data element under test, the OS-CFAR detection may be performed through determining whether the data element under test sufficiently stands out or differentiates against its signal environment, thus, by applying adaptive thresholding. For example, the control circuitry 120 may be configured to compare the selected data element to the data element under test and determine presence of a target and/or a motion of a target based on the comparison.

An optional intermediate processing may be that the control circuitry 120 is further configured to apply a predefined gain to the selected data element and compare the selected data element with the applied gain to the data element under test. That is, the data element under test may be required to differentiate against the selected data element by a certain level defined by the gain.

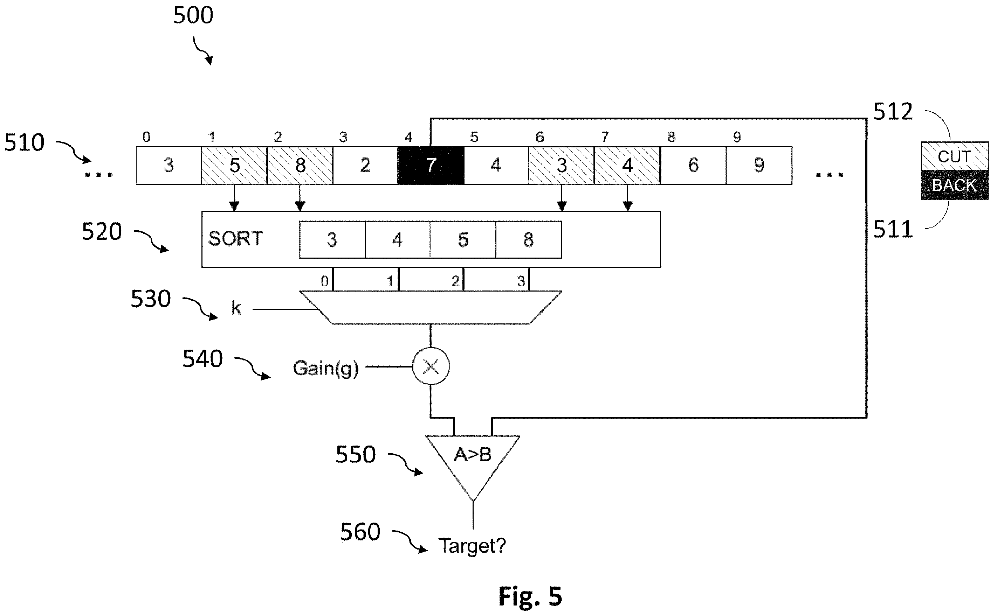

An example of a processing flow of an OS-CFAR detection 500 is illustrated by **Fig. 5****.** The OS-CFAR detection 500 may be performed by an apparatus as described herein, such as apparatus 100. The OS-CFAR detection 500 comprises selecting 510, by control circuitry, a window of radar data. The window comprises a plurality of data elements 511 (background signal) previous and next to a data element 512 under test (cell under test, CUT). The OS-CFAR detection 500 further comprises performing 520, by the control circuitry, a sorting algorithm for the selected window. The sorting algorithm may be performed through buffering data indicating the data elements 511 in a shift register and sorting the data, as explained above with reference to Fig. 1.

The OS-CFAR detection 500 further comprises, after performance of the sorting algorithm, selecting 530, by a selector k, a data element indicated by data stored at a predefined storage segment of the shift register and applying 540, by a multiplier, a predefined gain to the selected data element. The OS-CFAR detection 500 further comprises comparing 550, by a comparator, the selected data element with the applied gain to the data element 512 under test and determining 560 presence of a target and/or a motion of a target based on the comparison. For instance, N (e.g., 4) values may be ranked in the order of magnitude by the sorting algorithm. The smallest magnitude may appear at an output tab 0 and the largest at an output tab N-1. The selector k may choose one of these outputs which is then scaled by a configurable gain (g). Then, the scaled output may be compared against the cell under test, and the comparator may create a binary decision of a target detected or not.

Referring back to Fig. 1, the apparatus 100 may enable a further increase of the efficiency of an external processing circuitry for processing the radar data. The further processing may include elaborate radar data analysis such as a determination of at least one of a range, angle, velocity of a target. For example, the control circuitry 120 may be configured to, in response to determining presence of the target and/or a motion of the target, send an interrupt to the processing circuitry for triggering further processing of the radar data. By limiting the further processing to the relevant radar data which indicates a target (the data elements), the processing circuitry, e.g., a main processor, may be offloaded. The apparatus 100 may thus increase the computational and resource efficiency of the further processing of the radar data.

In summary, the apparatus 100 may provide an (e.g., embedded) hardware accelerated sorting using a set of shift registers, optionally, with an indexed sort using address data. The set of shift registers may accept external data (new samples) at each storage segment. Using a shift register may eliminate the necessity of relocating data by read/write operations. This may reduce the complexity of sorting from O(n²) to O(n), since only one portion of data (indicating one new data element) may be added to a pre-sorted array after each window change. The oldest data portion after the window change may be realized using a "pull" option which shifts the data in the opposite direction, where the deleted data would cause a gap. The sorting technique described herein, e.g., implementing an insertion sort, may reduce the OS-CFAR processing time significantly, which may reduce the latency of motion detection. Since a subset of data elements is defined by a sliding window, pre-sorted data stored in the shift register 110 may be reused from window to window. Therefore, the oldest data element or address may be deleted before a new one is added. Further, the shift register chains may be used for scan shift operations, such that the area overhead is minor compared to a standard register array.

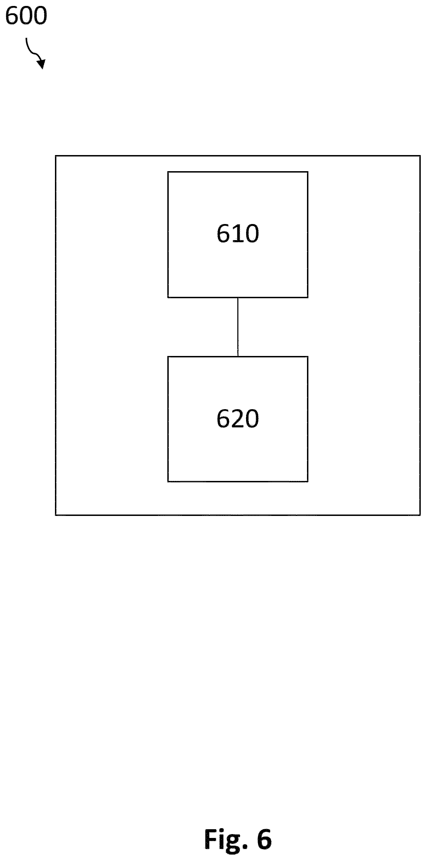

**Fig. 6** illustrates an example of a radar system 600. The radar system 600 comprises an apparatus 610 as described herein, such as apparatus 100, and a radar sensor 620 configured to generate the radar data. The radar sensor 620 may, for instance, be an FMCW (Frequency-Modulated Continuous Wave) radar sensor.

Although the apparatus 610 and the radar sensor 620 are depicted as separate blocks in Fig. 6, in other examples, the apparatus 610 may in part or in entirety be included in the radar sensor 620, which thus correspondingly includes all or part of the control circuitry and shift register of the apparatus 610. Thus, the radar sensor 620 may comprise the apparatus 610.

In case the apparatus 610 is only partially included in the radar sensor 620, the radar system 600 may perform distributed processing carrying out respective parts of the processing steps, e.g., in the form of first control (sub-) circuitry included in the radar sensor 620, and second control (sub-) circuitry external to the radar sensor and in communication with the first control circuitry through interface circuitry.

In case the apparatus 610 is integrated in the radar sensor 620, the control circuitry and the radar sensor 620 may be jointly integrated (embedded) in a single semiconductor chip, or in more than one semi-conductor chip.

In case the apparatus 610 is not included in the radar sensor 620, the control circuitry may take the form of circuitry external to the radar sensor 620 and may be communicatively coupled therewith through interface circuitry.

Optionally, the radar system 600 may enable parallel processing in a multi-antenna environment. In an example not being part of the invention, the radar sensor 620 may comprise a first antenna configured to receive a first signal from a field of view of the radar sensor 620. The radar sensor 620 is configured to generate the radar data based on the first signal. The radar sensor 620 may comprise at least one second antenna configured to receive at least one second signal from the field of view of the radar sensor 620. The radar sensor 620 is configured to generate second radar data based on the second signal. The radar system 600 may comprise at least one second apparatus as described herein, such as apparatus 100, configured to process the second radar data. The radar system 600 may benefit from the indexed sort because saving memory area may be even more relevant for multi-antenna systems with parallel processing.

The radar system 600 may further comprise processing circuitry external to the radar sensor 620. The processing circuitry is configured to, in response to receiving an interrupt from the apparatus 610, perform further processing of the radar data. In some examples, the radar system 600 further comprises the further storage circuitry.

More details and aspects of the radar system 600 are explained in connection with the proposed technique or one or more examples described above, e.g., with reference to Fig. 1. The radar system 600 may comprise one or more additional optional features corresponding to one or more aspects of the proposed technique, or one or more examples described above.

The radar system 600 may provide an (e.g., embedded) hardware accelerated sorting using a set of shift registers, optionally, with an indexed sort using address data. The sorting technique described herein, e.g., implementing an insertion sort, may reduce the OS-CFAR processing time significantly, which may reduce the latency of motion detection.

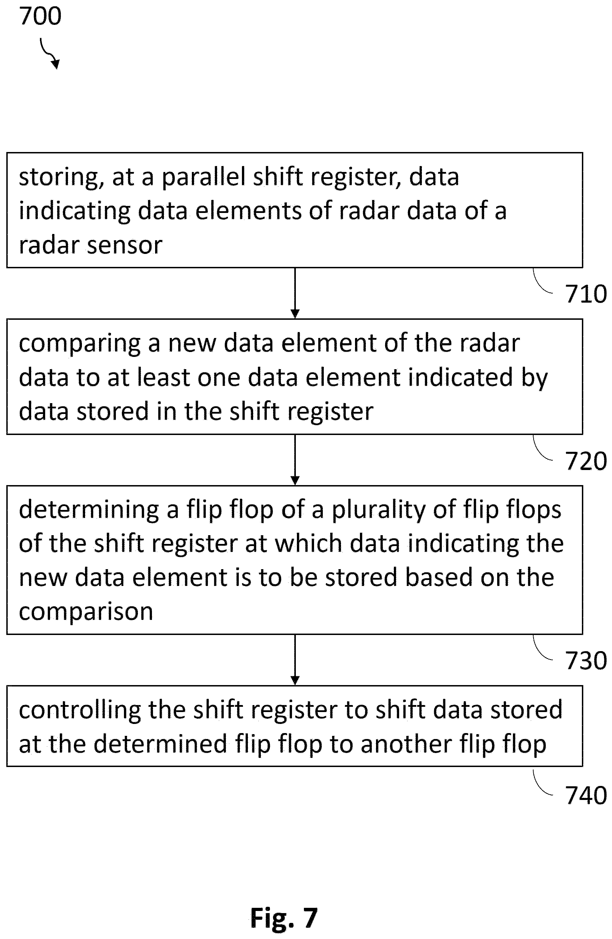

**Fig. 7** illustrates an example of a method 700 for OS-CFAR detection. The method 700 may be performed by an apparatus for OS-CFAR detection as described herein, such as apparatus 100. The method 700 comprises storing 710, at a parallel shift register coupling a plurality of storage segments in a cascade, data indicating data elements of radar data of a radar sensor.

The method 700 further comprises performing, by control circuitry, a sorting algorithm for OS-CFAR detection using the steps of comparing 720 a new data element of the radar data to at least one data element indicated by data stored in the parallel shift register, determining 730 at least one storage segment of the plurality of storage segments at which data indicating the new data element is to be stored based on the comparison and controlling 730 the parallel shift register to shift data stored at the determined storage segment to another storage segment.

The method 700 may provide an (e.g., embedded) hardware accelerated sorting using a set of shift registers, optionally, with an indexed sort using address data. The sorting technique described herein, e.g., implementing an insertion sort, may reduce the OS-CFAR processing time significantly, which may reduce the latency of motion detection.

More details and aspects of the method 700 are explained in connection with the proposed technique or one or more examples described above, e.g., with reference to Fig. 1. The method 700 may comprise one or more additional optional features corresponding to one or more aspects of the proposed technique, or one or more examples described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. An apparatus (100) for ordered statistics constant false alarm rate, OS-CFAR, detection, comprising:
a parallel shift register (110) coupling a plurality of storage segments (111, 112, 113) in a cascade, wherein the shift register (110) is configured to store data indicating data elements of radar data of a radar sensor; and
control circuitry (120) configured to perform a sorting algorithm for OS-CFAR detection using the steps of:
comparing a new data element of the radar data to at least one data element indicated by data stored in the parallel shift register (110);
determining at least one storage segment of the plurality of storage segments (111, 112, 113) at which data indicating the new data element is to be stored based on the comparison; and
controlling the parallel shift register (110) to shift data stored at the determined storage segment to another storage segment,
wherein the control circuitry (120) is further configured to:
perform the sorting algorithm for a first window of data elements of the radar data;
after the sorting algorithm for the first window is performed, select a second window of data elements of the radar data; and
perform the sorting algorithm for the second window through removing only partially the data stored in the parallel shift register (110) during performance of the sorting algorithm for the first window.

2. The apparatus (100) of claim 1, wherein the plurality of storage segments (111, 112, 113) are coupled to respective multiplexers, wherein the multiplexers comprise:
first input nodes coupled to respective output nodes of previous or subsequent storage segments in the cascade; and
second input nodes coupled to a data input.

3. The apparatus (100) of claim 2, wherein the multiplexers further comprise third input nodes coupled to respective output nodes of the other one of the previous or subsequent storage segments in the cascade.

4. The apparatus (100) of any one of the previous claims, wherein the parallel shift register (110) is configured to store address data indicating addresses of the data elements of radar data at a further storage circuitry.

5. The apparatus (100) of any one of the previous claims, wherein the control circuitry (120) is further configured to control the parallel shift register (110) to store data indicating the new data element at the determined storage segment.

6. The apparatus (100) of any one of the previous claims, wherein the control circuitry (120) is further configured to control the parallel shift register (110) to shift data stored in storage segments subsequent or previous to the determined storage segments by a predefined number of storage segments.

7. The apparatus (100) of any one of the previous claims, wherein the control circuitry (120) is configured to perform an insertion sort for OS-CFAR detection.

8. The apparatus (100) of any one of the previous claims, wherein the control circuitry (120) is further configured to perform the sorting algorithm for the second window through controlling the parallel shift register (110) to exclusively insert data indicating data elements of the second window which has not been inserted during performance of the sorting algorithm for the first window.

9. The apparatus (100) of any one of the previous claims, wherein the control circuitry (120) is further configured to, after performance of the sorting algorithm:
select a data element indicated by data stored at at least one predefined storage segment of the plurality of storage segments (111, 112, 113);
compare the selected data element to a data element under test; and
determine presence of a target and/or a motion of a target based on the comparison.

10. The apparatus (100) of claim 9, wherein the control circuitry (120) is configured to, in response to determining presence of a target and/or a motion, send an interrupt to a processing circuitry for triggering further processing of the radar data.

11. A radar system (600), comprising:
an apparatus (610) according to any one of the previous claims; and
a radar sensor (620) configured to generate the radar data.

12. The radar system of claim 11, further comprising processing circuitry external to the radar sensor (620), wherein the processing circuitry is configured to, in response to receiving an interrupt from the apparatus, perform further processing of the radar data.

13. A method (700) for ordered statistics constant false alarm rate, OS-CFAR, detection, comprising:
storing (710), at a parallel shift register coupling a plurality of storage segments in a cascade, data indicating data elements of radar data of a radar sensor; and
performing, by control circuitry, a sorting algorithm for OS-CFAR detection using the steps of:
comparing (720) a new data element of the radar data to at least one data element indicated by data stored in the parallel shift register;
determining (730) at least one storage segment of the plurality of storage segments at which data indicating the new data element is to be stored based on the comparison; and
controlling (740) the parallel shift register to shift data stored at the determined storage segment to another storage segment;
performing, by the control circuitry, the sorting algorithm for a first window of data elements of the radar data;
after the sorting algorithm for the first window is performed, selecting a second window of data elements of the radar data; and
performing the sorting algorithm for the second window through removing only partially the data stored in the parallel shift register (110) during performance of the sorting algorithm for the first window.

14. A non-transitory machine-readable medium having stored thereon a program having a program code for performing the method of claim 13, when the program is executed on a processor or a programmable hardware.

15. A program having a program code for performing the method of claim 13, when the program is executed on a processor or a programmable hardware.

## Patentansprüche

1. Vorrichtung (100) zur Detektion einer konstanten Falschalarmrate durch geordnete Statistik, OS-CFAR, umfassend:
ein Parallelschieberegister (110), das eine Mehrzahl von Speichersegmenten (111, 112, 113) in einer Kaskade koppelt, wobei das Schieberegister (110) dazu ausgelegt ist, Daten zu speichern, die Datenelemente von Radardaten eines Radarsensors angeben; und
eine Steuerschaltungsanordnung (120), die dazu ausgelegt ist, einen Sortieralgorithmus zur OS-CFAR-Detektion unter Verwendung der folgenden Schritte auszuführen:
Vergleichen eines neuen Datenelements der Radardaten mit mindestens einem Datenelement, das durch Adressdaten angegeben wird, die in der Parallelschieberegister (110) gespeichert sind;
Bestimmen mindestens eines Speichersegments der Mehrzahl von Speichersegmenten (111, 112, 113), in dem Adressdaten des neuen Datenelements gespeichert werden sollen, basierend auf dem Vergleich; und
Steuern des Parallelschieberegisters (110), um Adressdaten, die in dem bestimmten Speichersegment gespeichert sind, zu einem anderen Speichersegment zu verschieben,
wobei die Steuerschaltungsanordnung (120) ferner zu Folgendem ausgelegt ist:
Ausführen des Sortieralgorithmus für ein erstes Fenster von Datenelementen der Radardaten;
nach dem Ausführen des Sortieralgorithmus für das erste Fenster Auswählen eines zweiten Fensters von Datenelementen der Radardaten; und
Ausführen des Sortieralgorithmus für das zweite Fenster durch nur teilweises Entfernen der in dem Parallelschieberegister (110) gespeicherten Daten während der Ausführung des Sortieralgorithmus für das erste Fenster.

2. Vorrichtung (100) nach Anspruch 1, wobei die Mehrzahl von Speichersegmenten (111, 112, 113) mit jeweiligen Multiplexern gekoppelt ist, wobei die Multiplexer Folgendes umfassen:
erste Eingangsknoten, die mit jeweiligen Ausgangsknoten eines vorherigen oder eines nachfolgenden Speichersegments in der Kaskade gekoppelt sind; und
zweite Eingangsknoten, die mit einem Dateneingang gekoppelt sind.

3. Vorrichtung (100) nach Anspruch 2, wobei die Multiplexer ferner dritte Eingangsknoten umfassen, die mit jeweiligen Ausgangsknoten des anderen des vorherigen oder des nachfolgenden Speichersegments in der Kaskade gekoppelt sind.

4. Vorrichtung (100) nach einem der vorhergehenden Ansprüche, wobei das Parallelschieberegister (110) dazu ausgelegt ist, Adressdaten, die Adressen der Datenelemente von Radardaten angeben, in einer weiteren Speicherungsschaltungsanordnung zu speichern.

5. Vorrichtung (100) nach einem der vorhergehenden Ansprüche, wobei die Steuerschaltungsanordnung (120) ferner dazu ausgelegt ist, das Parallelschieberegister (110) so zu steuern, dass es Daten, die das neue Datenelement angeben, in dem bestimmten Speichersegment speichert.

6. Vorrichtung (100) nach einem der vorhergehenden Ansprüche, wobei die Steuerschaltungsanordnung (120) ferner dazu ausgelegt ist, das Parallelverschiebungsregister (110) so zu steuern, dass es alle Daten, die in Speichersegmenten nach oder vor dem bestimmten Speichersegment gespeichert sind, um eine vordefinierte Anzahl von Speichersegmenten verschiebt.

7. Vorrichtung (100) nach einem der vorhergehenden Ansprüche, wobei die Steuerschaltungsanordnung (120) dazu ausgelegt ist, eine Einfügungssortierung zur OS-CFAR-Detektion durchzuführen.

8. Vorrichtung (100) nach einem der vorhergehenden Ansprüche, wobei die Steuerschaltungsanordnung (120) ferner dazu ausgelegt ist, den Sortieralgorithmus für das zweite Fenster durch derartiges Steuern des Parallelverschiebungsregisters (110) auszuführen, dass ausschließlich Daten von Datenelementen des zweiten Fensters eingefügt werden, die während der Ausführung des Sortieralgorithmus für das erste Fenster nicht eingefügt wurden.

9. Vorrichtung (100) nach einem der vorhergehenden Ansprüche, wobei die Steuerschaltungsanordnung (120) nach der Ausführung des Sortieralgorithmus ferner zu Folgendem ausgelegt ist:
Auswählen eines Datenelements, das durch Daten angegeben wird, die in mindestens einem vordefinierten Speichersegment der Mehrzahl von Speichersegmenten (111, 112, 113) gespeichert sind;
Vergleichen des ausgewählten Datenelements mit einem zu testenden Datenelement; und
Bestimmen des Vorhandenseins eines Ziels und/oder einer Bewegung eines Ziels basierend auf dem Vergleich.

10. Vorrichtung (100) nach Anspruch 9, wobei die Steuerschaltungsanordnung (120) dazu ausgelegt ist, in Reaktion auf das Bestimmen des Vorhandenseins eines Ziels und/oder einer Bewegung einen Interrupt an eine Verarbeitungsschaltungsanordnung zu senden, um Weiterverarbeitung der Radardaten auszulösen.

11. Radarsystem (600), umfassend:
eine Vorrichtung (610) nach einem der vorhergehenden Ansprüche; und
einen Radarsensor (620), der dazu ausgelegt ist, die Radardaten zu erzeugen.

12. Radarsystem Anspruch 11, ferner umfassend eine Verarbeitungsschaltungsanordnung außerhalb des Radarsensors (620) umfasst, wobei die Verarbeitungsschaltungsanordnung dazu ausgelegt ist, in Reaktion auf das Empfangen eines Interrupts von der Vorrichtung Weiterverarbeitung der Radardaten durchzuführen.

13. Verfahren (700) zur Detektion einer konstanten Falschalarmrate durch geordnete Statistik, OS-CFAR, umfassend:
Speichern (710) von Daten, die Datenelemente von Radardaten eines Radarsensors angeben, in einem Parallelschieberegister, das eine Mehrzahl von Speichersegmenten in einer Kaskade koppelt; und
Ausführen eines Sortieralgorithmus zur OS-CFAR-Detektion durch eine Steuerschaltungsanordnung unter Verwendung der folgenden Schritte:
Vergleichen (720) eines neuen Datenelements der Radardaten mit mindestens einem Datenelement, das durch Daten angegeben wird, die in dem Parallelverschiebungsregister gespeichert sind;
Bestimmen (730) mindestens eines Speichersegments der Mehrzahl von Speichersegmenten, in dem Daten des neuen Datenelements gespeichert werden sollen, basierend auf dem Vergleich; und
Steuern (740) des Parallelverschiebungsregisters so, dass es Daten, die in dem bestimmten Speichersegment gespeichert sind, zu einem anderen Speichersegment verschiebt;
Ausführen des Sortieralgorithmus durch die Steuerschaltungsanordnung für ein erstes Fenster von Datenelementen der Radardaten;
nach dem Ausführen des Sortieralgorithmus für das erste Fenster Auswählen eines zweiten Fensters von Datenelementen der Radardaten; und
Ausführen des Sortieralgorithmus für das zweite Fenster durch nur teilweises Entfernen der in dem Parallelschieberegister (110) gespeicherten Daten während der Ausführung des Sortieralgorithmus für das erste Fenster.

14. Nichtflüchtiges maschinenlesbares Medium, auf dem ein Programm mit einem Programmcode zum Durchführen des Verfahrens nach Anspruch 13 gespeichert ist, wenn das Programm auf einem Prozessor oder einer programmierbaren Hardware ausgeführt wird.

15. Programm mit einem Programmcode zum Durchführen des Verfahrens nach Anspruch 13, wenn das Programm auf einem Prozessor oder einer programmierbaren Hardware ausgeführt wird.

## Revendications

1. Appareil (100) de détection de taux de fausse alarme constant de statistiques ordonnées, OS-CFAR, comprenant:
un registre à décalage parallèle (110) couplant une pluralité de segments de stockage (111, 112, 113) en cascade, le registre à décalage (110) étant conçu pour stocker des données indiquant des éléments de données de données radar d'un capteur radar ; et
des circuits de commande (120) conçus pour exécuter un algorithme de tri pour la détection OS-CFAR en utilisant les étapes suivantes :
la comparaison d'un nouvel élément de données des données radar à au moins un élément de données indiqué par des données stockées dans le registre à décalage parallèle (110) ;
la détermination d'au moins un segment de stockage de la pluralité de segments de stockage (111, 112, 113) au niveau duquel des données indiquant le nouvel élément de données doivent être stockées sur la base de la comparaison ; et
la commande au registre à décalage parallèle (110) de décaler des données stockées au niveau du segment de stockage déterminé vers un autre segment de stockage,
dans lequel les circuits de commande (120) sont en outre conçus pour :
exécuter l'algorithme de tri pour une première fenêtre d'éléments de données des données radar ;
après avoir exécuté l'algorithme de tri pour la première fenêtre, sélectionner une seconde fenêtre d'éléments de données des données radar ; et
exécuter l'algorithme de tri pour la seconde fenêtre en ne supprimant que partiellement les données stockées dans le registre à décalage parallèle (110) pendant la mise en œuvre de l'algorithme de tri pour la première fenêtre.

2. Appareil (100) selon la revendication 1, dans lequel la pluralité de segments de stockage (111, 112, 113) sont couplés à des multiplexeurs respectifs, les multiplexeurs comprenant :
des premiers nœuds d'entrée couplés à des nœuds de sortie respectifs de segments de stockage antérieurs ou postérieurs dans la cascade ; et
des deuxièmes nœuds d'entrée couplés à une entrée de données.

3. Appareil (100) selon la revendication 2, dans lequel les multiplexeurs comprennent en outre des troisièmes nœuds d'entrée couplés à des nœuds de sortie respectifs de l'autre des segments de stockage antérieurs ou postérieurs dans la cascade.

4. Appareil (100) selon l'une quelconque des revendications précédentes, dans lequel le registre à décalage parallèle (110) est conçu pour stocker des données d'adresse indiquant des adresses des éléments de données de données radar au niveau de circuits de stockage supplémentaires.

5. Appareil (100) selon l'une quelconque des revendications précédentes, dans lequel les circuits de commande (120) sont en outre conçus pour commander au registre à décalage parallèle (110) de stocker des données indiquant le nouvel élément de données au niveau du segment de stockage déterminé.

6. Appareil (100) selon l'une quelconque des revendications précédentes, dans lequel les circuit de commande (120) sont en outre conçus pour commander au registre à décalage parallèle (110) de décaler d'un nombre prédéfini de segments de stockage des données stockées dans des segments de stockage postérieurs ou antérieurs aux segments de stockage déterminés.

7. Appareil (100) selon l'une quelconque des revendications précédentes, dans lequel les circuits de commande (120) sont conçus pour effectuer un tri d'insertion pour la détection OS-CFAR.

8. Appareil (100) selon l'une quelconque des revendications précédentes, dans lequel les circuits de commande (120) sont en outre conçus pour exécuter l'algorithme de tri pour la seconde fenêtre en commandant au registre à décalage parallèle (110) d'insérer exclusivement des données indiquant des éléments de données de la seconde fenêtre qui n'ont pas été insérés pendant la mise en œuvre de l'algorithme de tri pour la première fenêtre.

9. Appareil (100) selon l'une quelconque des revendications précédentes, dans lequel les circuits de commande (120) sont en outre conçus pour, après la mise en œuvre de l'algorithme de tri :
sélectionner un élément de données indiqué par des données stockées au niveau d'au moins un segment de stockage prédéfini de la pluralité de segments de stockage (111, 112, 113) ;
comparer l'élément de données sélectionné à un élément de données testé ; et
déterminer la présence d'une cible et/ou d'un mouvement d'une cible sur la base de la comparaison.

10. Appareil (100) selon la revendication 9, dans lequel les circuits de commande (120) sont conçus pour, en réponse à la détermination de la présence d'une cible et/ou d'un mouvement, envoyer une interruption à des circuits de traitement pour déclencher un traitement supplémentaire des données radar.

11. Système radar (600), comprenant :
un appareil (610) selon l'une quelconque des revendications précédentes ; et
un capteur radar (620) conçu pour générer les données radar.

12. Système radar selon la revendication 11, comprenant en outre des circuits de traitement externes au capteur radar (620), les circuits de traitement étant conçus pour, en réponse à la réception d'une interruption de l'appareil, effectuer un traitement supplémentaire des données radar.

13. Procédé (700) de détection de taux de fausse alarme constant de statistiques ordonnées, OS-CFAR, comprenant:
le stockage (710), au niveau d'un registre à décalage parallèle couplant une pluralité de segments de stockage dans une cascade, de données indiquant des éléments de données de données radar d'un capteur radar ; et
l'exécution, par des circuits de commande, d'un algorithme de tri pour la détection OS-CFAR en utilisant les étapes suivantes :
la comparaison (720) d'un nouvel élément de données des données radar à au moins un élément de données indiqué par des données stockées dans le registre à décalage parallèle ;
la détermination (730) d'au moins un segment de stockage de la pluralité de segments de stockage au niveau duquel des données indiquant le nouvel élément de données doivent être stockées sur la base de la comparaison ; et la commande (740) du registre à décalage parallèle pour décaler des données stockées au niveau du segment de stockage déterminé vers un autre segment de stockage ;
l'exécution, par les circuits de commande, de l'algorithme de tri pour une première fenêtre d'éléments de données des données radar ;
après avoir exécuté l'algorithme de tri pour la première fenêtre, la sélection d'une seconde fenêtre d'éléments de données des données radar ; et
l'exécution de l'algorithme de tri pour la seconde fenêtre en ne supprimant que partiellement les données stockées dans le registre à décalage parallèle (110) pendant la mise en œuvre de l'algorithme de tri pour la première fenêtre.

14. Support lisible par machine non transitoire sur lequel est stocké un programme ayant un code de programme pour exécuter le procédé selon la revendication 13, lorsque le programme est exécuté sur un processeur ou un matériel programmable.

15. Programme ayant un code de programme pour effectuer le procédé selon la revendication 13, lorsque le programme est exécuté sur un processeur ou un matériel programmable.
